# FASCICULE DE BREVET EUROPEEN

(11) **EP 4 178 138 B1**
(45) Date de publication et mention de la délivrance du brevet: **05.08.2026**
(21) Numéro de dépôt: 22203381.3
(22) Date de dépôt: 24.10.2022
(51) Int. Cl.: H04L 1/20, H04W 4/70

(54) **PROCÉDÉ DE CONFIGURATION D'UN DISPOSITIF ÉLECTRONIQUE RELIÉ À UN RÉSEAU DE COMMUNICATIONS**
VERFAHREN ZUR KONFIGURATION EINER MIT EINEM KOMMUNIKATIONSNETZ VERBUNDENEN ELEKTRONISCHEN VORRICHTUNG
METHOD FOR CONFIGURING AN ELECTRONIC DEVICE CONNECTED TO A COMMUNICATION NETWORK

(30) Priorité: 04.11.2021 FR 2111709
(43) Date de publication de la demande: 10.05.2023
(73) Titulaire: Orange, 92130 Issy-les-Moulineaux (FR)
(72) Inventeur: CIBAUD, David, 92326 Chatillon (FR); CUMIN, Julien, 92326 Chatillon (FR)

(56) Documents cités:
- WO-A1-2015/027373
- ALCATEL-LUCENT ET AL: "Coverage enhancement mode operation", vol. RAN WG2, no. Prague, Czech Republic; 20140210 - 20140214, 9 February 2014 (2014-02-09), XP050792018, Retrieved from the Internet <URL:http://www.3gpp.org/ftp/Meetings_3GPP_SYNC/RAN2/Docs/> [retrieved on 20140209]

## Description

La présente invention concerne un procédé de configuration d'un dispositif électronique tel qu'objet connecté.

Elle concerne en outre un procédé d'émission d'un message mis en œuvre par un dispositif électronique ayant été configuré par un procédé de configuration selon l'invention.

L'invention s'applique en particulier aux objets connectés et notamment aux objets connectés qui sont configurés pour émettre régulièrement des messages.

L'utilisation d'objets connectés continue de s'accroître. Il est commun de nos jours de trouver des environnements où de très nombreux objets connectés sont installés. On connait des environnements (par exemple des bâtiments, des usines, des villes etc.) où sont installés des centaines voire des milliers d'objets connectés à un réseau de communications. Ces objets connectés peuvent être, par exemple, des capteurs de tout type pouvant envoyer des données via un réseau de communication à un équipement, tel qu'un serveur, récoltant ces données.

Dans ce type d'environnement où de nombreux objets sont installés, la consommation globale d'énergie est importante. Une des opérations étant couteuse en énergie pour un objet connecté est l'émission de messages en utilisant des technologies sans fil, et ce malgré les efforts de réduction de la consommation des protocoles utilisés. Or parfois l'émission de certains messages s'avère inutile, l'énergie consommée lors de l'émission de ces messages étant consommée inutilement.

En outre, il arrive souvent que les objets connectés soient alimentés par des piles ou des batteries, la connexion à un réseau d'alimentation électrique n'étant pas possible ou étant difficile ou non souhaitée pour des raisons diverses. Dans ce type d'objets alimentés par piles ou batteries, il est d'autant plus important de réduire la consommation d'énergie, afin de réduire le remplacement des piles ou des batteries autant que possible. En outre, le remplacement des piles ou des batteries d'un objet peut s'avérer difficile voire impossible du fait de l'emplacement de l'objet.

Ainsi, il existe un besoin de réduire la consommation des objets connectés, ou tout du moins l'optimiser, tout particulièrement la consommation des objets connectés qui ne sont pas alimentés par un réseau d'alimentation électrique.

La présente invention a pour but d'optimiser la consommation des dispositifs électroniques reliés à un réseau de communication, tels que des objets connectés. Le document 3GPP "Coverage enhancement mode operation", R2-140728 offre une solution de modulation d'envoi des messages en fonction du mode de couverture d'un objet connecté.

À cet effet, l'invention fournit un procédé de configuration selon la revendication 1, un dispositif électronique correspondant en revendication 8, des système, programme d'ordinateur et support d'informations en revendications 13, 14 et 15. Les revendications dépendantes présentent d'autres modes de réalisation de l'invention.

Ainsi, le dispositif électronique est configuré en prenant en compte l'environnement où il est installé. Le fonctionnement du dispositif électronique ainsi configuré, est par conséquent, adapté à son environnement, consommant de l'énergie lorsqu'il est nécessaire et économisant de l'énergie lorsqu'il est possible. La consommation d'énergie du dispositif électronique est ainsi optimisée.

En outre, le dispositif électronique est configuré une fois installé dans l'environnement où il est utilisé et une fois relié au réseau de communications. Ainsi, sa configuration prend compte des conditions réelles qui l'entourent.

Une information contextuelle relative à l'environnement du dispositif électronique correspond à toute information relative au contexte dans lequel se situe le dispositif électronique, ou autrement dit, à toute information relative aux conditions entourant le dispositif électronique. L'information contextuelle peut

prendre la forme d'un paramètre caractérisant l'environnement du dispositif électronique. On notera qu'un ensemble d'informations contextuelles relatives à l'environnement d'un dispositif électronique, décrit ou définit l'environnement du dispositif ou autrement dit, l'environnement d'un dispositif peut être défini par un ensemble d'informations contextuelles. Les exemples d'informations contextuelles sont multiples et peuvent être par exemple des conditions ambiantes comme la température ou l'humidité de l'air entourant le dispositif, le niveau de lumière ambiante, le niveau de bruit ambiant, des conditions temporelles comme la date ou l'heure, des conditions telles que la présence ou l'absence d'une personne ou d'un objet à proximité du dispositif, l'identité d'une personne à proximité du dispositif (par exemple interagissant le dispositif) etc.

Ainsi, les opérations d'émission étant adaptés à l'environnement du dispositif électronique, la consommation d'énergie relative aux opérations d'émission est optimisée vis-à-vis de l'environnement du dispositif.

Par exemple, le dispositif électronique peut émettre des messages plus ou moins fréquemment en fonction de certaines conditions de son entourage.

Par exemple, un capteur de température installé dans une pièce et adressant des valeurs de température mesurées à un serveur gérant un système de climatisation de la pièce, peut configurer ses paramètres d'émission de façon à émettre les valeurs de température plus ou moins souvent en fonction de l'environnement du capteur. En effet, en fonction des situations, par exemple en fonction du moment de la journée ou en fonction de l'occupation ou non de l'habitation, l'envoi d'informations relatives à la température peut s'avérer utile ou inutile. Par exemple, une fluctuation de température par rapport à une température de consigne utilisée pour la régulation de la température d'une pièce, peut impacter plus ou moins les occupants de l'habitation selon que la variation de température se produise pendant la journée ou pendant la nuit.

Selon un exemple, le capteur peut être configuré pour remonter des valeurs de température au serveur périodiquement, la fréquence d'émission des messages pouvant être établie à des valeurs différents en fonction de l'heure obtenue. À cette fin, le capteur de température peut par exemple établir la fréquence d'émission à une première valeur lorsque l'heure obtenue est comprise entre 8h et 24h et à une deuxième valeur inférieure à la première valeur lorsque l'heure obtenue se trouve en dehors de la tranche l'horaire précitée. On notera que dans cet exemple, l'information contextuelle obtenue par le capteur est l'heure et que le paramètre de configuration du capteur est un paramètre relatif à l'émission de messages.

Selon un autre exemple de configuration du capteur de température, le capteur peut être configuré pour adresser un message au serveur lorsque la température varie par rapport à une température de consigne fixée par un utilisateur (envoi de messages selon une condition). Par exemple, un capteur peut être configuré pour émettre un message lorsque la température de la pièce par rapport à une température de consigne varie de 1°C pendant la journée, et dès que la nuit arrive (ou à partir d'une heure prédéfinie), le capteur est reconfiguré pour émettre un message lorsque l'écart de température est de 3°C. Grâce à la configuration du capteur, le nombre de messages envoyés pendant la nuit est inférieur au nombre de messages envoyés pendant la journée. On notera que dans cet exemple, l'information contextuelle peut être l'heure mais aussi une donnée représentative de la luminosité ambiante, reçue par exemple en provenance d'un capteur de luminosité installé dans la pièce.

Ainsi, grâce à l'invention, en fonction d'une information relative à l'environnement du capteur, par exemple qu'il fasse jour ou nuit, que la pièce soit occupée ou vide etc., le capteur peut être configuré pour émettre des messages plus ou moins souvent.

Ainsi, le dispositif électronique émet des messages en fonction de son environnement, évitant d'émettre des messages dans des situations où l'émission de messages n'est pas nécessaire et réservant l'émission de messages aux situations dans lesquelles l'émission de messages est nécessaire.

Les messages n'étant émis que lorsqu'il est nécessaire, la consommation d'énergie du dispositif électronique est optimisée, et très souvent réduite. Autrement dit, il est à noter qu'en limitant l'émission de messages aux situations dans lesquelles leur émission s'avère nécessaire, la consommation d'énergie du dispositif électronique peut être réduite.

Selon un autre exemple, le procédé comporte l'établissement en outre d'un paramètre de configuration définissant la puissance d'émission de messages.

Ainsi, le dispositif électronique est configuré pour émettre des messages avec une puissance d'émission plus ou moins élevée en fonction des besoins. Par exemple, lorsque l'information contextuelle donne une indication de la distance à laquelle est situé un objet destinataire des messages émis par le dispositif électronique, la puissance d'émission des messages est adaptée en fonction de cette distance. On notera que si l'objet destinataire est déplacé, le dispositif électronique peut être reconfiguré pour prendre en compte le nouvel emplacement de l'objet destinataire.

Selon une caractéristique, le procédé de configuration comporte en outre la sélection d'un paramètre en fonction de ladite au moins une information contextuelle obtenue.

Le paramètre à configurer est fonction de l'information contextuelle reçue ou du type de l'information contextuelle obtenue. Par exemple, si l'information contextuelle correspond à une indication de la distance à laquelle est situé l'objet destinataire des messages, le paramètre sélectionné peut être la puissance d'émission de messages.

Pour cela, le dispositif électronique peut consulter une table répertoriant des informations contextuelles, chaque information contextuelle ayant associé un paramètre de configuration du dispositif électronique. Cette table est par exemple stockée dans la mémoire du dispositif électronique.

Selon une caractéristique, l'obtention d'au moins une information contextuelle comporte la réception d'un message comportant ladite au moins une information contextuelle.

Dans ce mode de réalisation, l'information contextuelle est obtenue par un équipement relié au réseau de communication qui est différent du dispositif électronique. Le dispositif électronique reçoit l'information contextuelle insérée dans un message, l'obtention de l'information contextuelle consistant à extraire cette information contextuelle du message reçu.

Dans un mode de réalisation, le message comportant ladite au moins une information contextuelle est reçue en provenance d'un dispositif d'accès permettant l'accès du réseau de communications à un autre réseau de communications.

Le dispositif d'accès peut lui-même obtenir l'information contextuelle ou le recevoir d'un deuxième dispositif électronique relié au réseau de communications.

Dans un autre mode de réalisation, le message comportant ladite au moins une information contextuelle est reçue en provenance d'un deuxième dispositif électronique relié audit réseau de communications.

Dans ce mode de réalisation, le message comportant ladite au moins une information contextuelle ne transite pas par le dispositif d'accès, mais est adressé directement au dispositif électronique.

On notera que le deuxième dispositif électronique est différent du dispositif électronique mettant en œuvre le procédé de configuration.

Selon une caractéristique, ladite au moins une information contextuelle obtenue a été préalablement signée par un tiers de confiance.

La signature de l'information contextuelle obtenue par le dispositif électronique garantie l'authenticité de l'information contextuelle et évite les tentatives malveillantes de configuration ou reconfiguration du dispositif électronique.

Un tiers de confiance peut être par exemple une entité telle qu'une autorité de certification certifiant l'authenticité de l'information contextuelle. Le tiers de confiance appose une signature numériquement, par exemple une signature cryptographique asymétrique.

Dans un autre mode de réalisation, l'information contextuelle est obtenue par le dispositif électronique lui-même.

Par exemple, le dispositif électronique est configuré pour l'obtenir lui-même des informations contextuelles relatives à son environnement. Par exemple, le dispositif électronique peut comporter des capteurs tels qu'un capteur de température et/ou d'humidité pouvant obtenir la température et/ou l'humidité de l'air environnant le capteur. Le dispositif électronique peut aussi comporter une horloge interne, au moyen duquel le dispositif électronique peut obtenir l'heure.

D'autres particularités et avantages de l'invention apparaîtront encore dans la description ci-après.

Aux dessins annexés, donnés à titre d'exemples non limitatifs :
- la figure 1 représente un système pouvant mettre un œuvre l'invention ;
- la figure 2a illustre des étapes du procédé de configuration selon un premier mode de réalisation ;
- la figure 2b illustre des étapes du procédé de configuration selon un deuxième mode de réalisation ;
- la figure 3 illustre des étapes du procédé d'émission conforme à un mode de réalisation de l'invention ;
- la figure 4a illustre une architecture matérielle pouvant mettre en œuvre le procédé de configuration et/ou le procédé d'émission conforme à l'invention ; et
- la figure 4b est une représentation fonctionnelle d'un dispositif électronique conforme à un mode de réalisation de l'invention.

L'invention s'applique particulièrement à tout objet connecté ou communicant, c'est-à-dire à tout objet configuré pour communiquer (émettre ou recevoir des données) avec d'autres équipements.

Dans la suite de ce document, le terme objet ou objet connecté sera utilisé indistinctement.

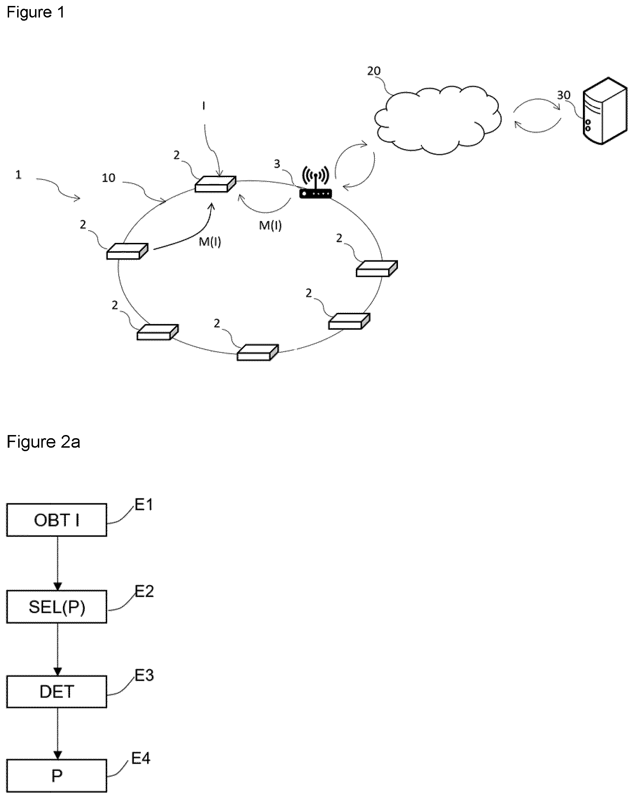

La **figure 1** représente un système pouvant mettre en œuvre un mode de réalisation de l'invention. Le système 1 comporte un ensemble de dispositifs électroniques 2 reliés à un réseau de communications 10.

Un dispositif électronique 2 peut être un objet connecté (ou objet communicant), ou faire partie d'un objet connecté. Dans la description ci-dessous, il est considéré que le dispositif électronique est un objet connecté.

Les objets connectés 2 peuvent être de type divers et être utilisés pour de nombreuses applications. Des exemples d'objets connectés sont un terminal de téléphonie mobile, un ordinateur portable, une tablette, une passerelle, une imprimante, une enceinte audio, un décodeur de télévision, un téléviseur, une console de jeux, un appareil électroménager, un capteur, une caméra, une montre, des lunettes etc. Les objets connectés 2 sont utilisés dans de nombreux contextes et pour des nombreuses applications.

Un dispositif d'accès 3, tel qu'une passerelle d'accès, permettant l'accès à un deuxième réseau de communications 20 est aussi relié au réseau de communications 10. Par exemple, le premier réseau de communications 10 est un réseau de type LAN (pour « Local Area Network »), tel qu'un réseau résidentiel ou un réseau d'entreprise, et le deuxième réseau de communications 20 est un réseau de communications étendu 20 ou réseau de type WAN (pour « Wide Area Network »), tel qu'Internet.

Les objets connectés 2 et la passerelle d'accès 3 sont configurés pour échanger des données entre eux, au moins selon des communications sans fils, par exemple conformément à un protocole Wi-Fi (pour « Wireless FIdelity », marque déposée). De manière classique, la passerelle d'accès 3 permet la communication des objets connectés 2 avec des équipements faisant partie du deuxième réseau de communications 20, par exemple des serveurs 30.

En outre, les objets connectés 2 peuvent communiquer entre eux pair-à-pair (ou « peer-to-peer » en anglais), ou autrement dit sans passer par la passerelle d'accès 3. Les communications pair-à-pair peuvent être mises en œuvre selon de nombreuses technologies, tel que Bluetooth (marque déposée), WiFI, WiFI Direct, LTE (Long Term Evolution), etc.

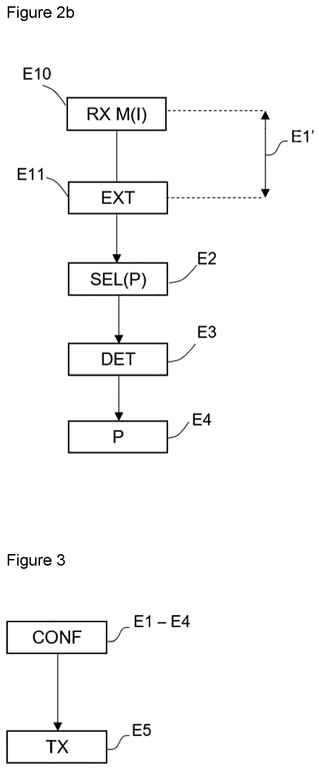

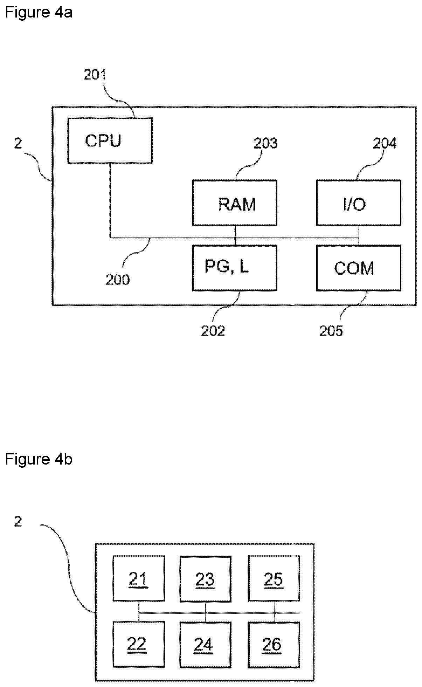

Le dispositif électronique 2 sera décrit plus en détail en référence aux figures 4a et 4b. Il est configuré pour mettre en œuvre le procédé de configuration et/ou le procédé d'émission proposé. Les procédés de configuration et d'émissions seront décrits en détail en référence aux figures 2a, 2b et 3.

Les objets connectés peuvent être préconfigurés en usine ou une fois installés sur le terrain. Grâce à l'invention proposée, les objets connectés peuvent être configurés et reconfigurés sur le terrain, autant de fois que nécessaire et en temps réel, tenant compte des variations dans l'environnement de l'objet connecté, telles que le créneau horaire, les conditions ambiantes (température, humidité, etc.), le déplacement, l'ajout ou la suppression d'un objet dans l'environnement.

Les **figures 2a** **et** **2b** représentent des étapes du procédé de configuration selon un premier mode de réalisation et un deuxième mode de réalisation respectivement.

Le procédé de configuration peut être mis en œuvre à des moments différents, par exemple lors de la première installation de l'objet connecté, lors de sa mise sous tension, périodiquement (par exemple toutes les heures), à des instants préprogrammés etc. Selon d'autres modes de réalisation, le procédé peut être mise en œuvre à la réception d'un message spécifique, ce message pouvant provenir d'un autre objet ou de l'objet lui-même. Ce message spécifique peut par exemple indiquer un changement dans l'environnement et/ou contenir une information contextuelle, une reconfiguration de l'objet s'avérant utile. Selon les modes de réalisation, ce message spécifique peut être généré par un autre objet (par exemple un autre capteur) ou par l'objet lui-même (par exemple lorsqu'il détecte un changement dans l'environnement). Dans un autre mode de réalisation, le message spécifique peut comporter une requête de configuration destinée à déclencher la mise en œuvre du procédé de configuration.

Le procédé de configuration est mis en œuvre par un objet connecté et comporte l'obtention E1, E1' d'au moins une information contextuelle I relative à l'environnement de l'objet 2.

Ainsi, comme indiqué ci-dessous l'obtention E1, E1' d'une information contextuelle I peut être mise en œuvre à des instants différents, par exemple régulièrement ou dès qu'un changement dans l'environnement est détecté par l'objet lui-même ou par un autre objet, etc.

Dans un premier mode de réalisation (figure 2a), l'objet connecté 2 est configuré pour obtenir l'information contextuelle par lui-même. Dans ce mode de réalisation, l'objet connecté met en œuvre sa configuration en autonomie, sans nécessiter d'aucune information en provenance d'autres équipements.

Comme indiqué ci-dessus les informations contextuelles sont variées et peuvent donner tout type d'indication sur le contexte dans lequel se situe l'objet connecté. Ainsi, l'objet connecté peut obtenir, selon le mode de réalisation, une ou plusieurs informations contextuelles. À cet effet, l'objet connecté peut comporter un capteur ou plusieurs capteurs, par exemple de température, de mouvement, de lumière, d'humidité etc., et être configuré pour obtenir une information contextuelle au moins en utilisant l'un de ces capteurs. L'objet connecté peut aussi comporter un dispositif d'horloge interne.

Des exemples d'informations contextuelles sont une valeur de température, d'humidité, de niveau de luminosité, une valeur indiquant la présence ou l'absence d'une personne à proximité, l'heure courante, etc.

Dans un mode de réalisation, l'objet connecté peut être configuré pour déterminer le niveau de puissance d'un signal reçu, ce niveau étant représentatif de la distance entre l'objet connecté et l'objet émettant le signal.

Dans un autre mode de réalisation, tel que celui représenté à la figure 2b, l'obtention E1' d'au moins une information contextuelle I comporte la réception E10 d'un message M comportant l'information contextuelle. La réception E10 du message est suivie d'une extraction E11 de l'information contextuelle I du message M reçu.

L'origine des messages M peut être différente selon les modes de réalisation.

Dans un mode de réalisation, le message comportant l'information contextuelle est reçu en provenance du dispositif d'accès 3 permettant l'accès du premier réseau de communications 10 au deuxième réseau de communications 20. Le dispositif d'accès 3 peut obtenir lui-même l'information contextuelle ou le recevoir d'un autre objet, par exemple un autre objet connecté au premier réseau de communications (un capteur par exemple).

Dans ce dernier mode de réalisation, l'objet connecté 2 obtient l'information contextuelle d'un deuxième objet connecté au réseau de communications 10 par l'intermédiaire du dispositif d'accès 3.

Dans un autre mode de réalisation, le message M comportant l'information contextuelle est reçu directement du deuxième objet relié au réseau de communications 10.

Dans un mode de réalisation, l'information contextuelle a été préalablement signée par un tiers de confiance. Selon le mode de réalisation, ce tiers de confiance peut être le dispositif d'accès 3 émettant le message M à destination de l'objet connecté 2, ou un autre équipement du premier réseau de communications 10 (par exemple un mobile d'un utilisateur) ou du deuxième réseau de communications 20. On notera que le dispositif d'accès 3 peut faire office de tiers de confiance si les messages échangés entres les objets transitent par ce dispositif d'accès. On notera en outre que les protocoles de communication radio tel que WiFi, Bluetooth, ZigBee, etc. intègrent nativement des fonctions de chiffrement qui sécurisent les échanges de données entres les objets.

Les opérations de signature de données sont connues et ne seront pas décrites ici.

On notera que ces deux modes de réalisation peuvent être combinés. Par exemple, l'objet connecté peut obtenir une ou plusieurs informations contextuelles par lui-même (figure 2a) ainsi que recevoir une ou plusieurs informations contextuelles en provenance d'un autre objet connecté (figure 2b).

Une fois que l'information contextuelle est obtenue, un paramètre de configuration P est sélectionné E2 en fonction du type de l'information contextuelle I obtenue.

Selon un mode de réalisation, la sélection du paramètre de configuration P peut être mise en œuvre en utilisant une liste L répertoriant de couples formés respectivement par une information contextuelle et un paramètre associé. Une telle liste peut être stockée dans la mémoire de l'objet connecté 2 et peut être mise jour en fonction de l'évolution de la constitution du réseau de communications 10. Dans d'autres modes de réalisation cette liste peut être stockée dans la mémoire d'un autre équipement du réseau, par exemple le dispositif d'accès 3.

A titre d'exemple nullement limitatif, une liste L peut prendre la forme suivante. Bien entendu, d'autres informations et d'autres paramètres ainsi que d'autres associations entre les deux sont possibles.

| **Information contextuelle** | **Paramètre** |
|---|---|
| Présence ou absence d'une personne | Fréquence d'émission |
| Heure | Fréquence d'émission |
| Heure | Condition/seuil conditionnant l'émission d'un message |
| Niveau de réception signal | Puissance d'émission |
| Données de géolocalisation d'un utilisateur | Fréquence d'émission |

On notera que cette étape de sélection E2 est optionnelle et que certains objets connectés ne la mettent pas en œuvre. Par exemple, selon un mode de réalisation, le paramètre à configurer est indiqué dans le message reçu contenant l'information contextuelle. Selon un autre mode de réalisation, le paramètre de configuration est déjà présélectionné ou sélectionné par défaut.

Dans un mode de réalisation, le paramètre de configuration est un paramètre relatif à l'émission de messages. Par exemple, le paramètre de configuration peut être un paramètre définissant l'instant d'émission de messages. Selon un autre exemple, le paramètre de configuration peut être un paramètre définissant la puissance d'émission de messages.

Ensuite, la valeur du paramètre est déterminée E3 en fonction de l'information contextuelle obtenue et le paramètre de configuration P est établi E4 à cette valeur déterminée. À titre d'exemple nullement limitatif, la valeur du paramètre de configuration P est déterminée à partir d'une table de correspondance établie par le constructeur de l'objet connecté, dans laquelle chaque valeur ou intervalle de valeurs de l'information contextuelle est associé à une valeur d'un paramètre P. Par exemple, dans le cas d'un capteur de température émettant périodiquement des valeurs mesurées, la table de correspondance associé des heures (ou tranches horaires) avec des valeurs de fréquence d'émission respectivement.

Dans un autre exemple, la valeur du paramètre de configuration P est calculée grâce une fonction mathématique établie par le constructeur et faisant intervenir l'information contextuelle dans le calcul.

Bien entendu, le procédé de configuration peut comprendre l'établissement de plusieurs paramètres de configuration à des valeurs étant fonction d'une ou plusieurs informations contextuelles. Par exemple, la fréquence et le seuil d'émission d'un capteur de température peuvent être calculés en fonction de la période de la journée et de la pièce dans laquelle le capteur est installé (certaines pièces n'ayant pas les mêmes besoins de confort en température).

Dans d'autres modes de réalisation, plusieurs informations contextuelles sont obtenues mais un unique paramètre de configuration est modifié. La valeur à laquelle le paramètre de configuration est établie peut-être déterminée en prenant en compte une ou plusieurs informations contextuelles parmi les informations contextuelles obtenues.

La **figure 3** représente des étapes du procédé d'émission selon un mode de réalisation.

Ce procédé d'émission comporte la configuration de l'objet connecté 2 en mettant en œuvre un mode de réalisation du procédé de configuration décrit précédemment (E1, E2, E3, E4).

Une fois que l'objet connecté 2 est configuré, un message est émis E5 par l'objet connecté. Ce message peut être émis à destination d'équipements divers, tels qu'un autre objet connecté, le dispositif d'accès 3 ou un serveur relié au dispositif d'accès 3 via le deuxième réseau de communications 20.

À titre d'exemple nullement limitatif, le dispositif électronique peut être un capteur de température installé dans une habitation et adressant des informations relatives à la température d'une pièce à un serveur gérant un système de climatisation de l'habitation. Selon différentes configurations du capteur, la température de la pièce peut être remontée au serveur périodiquement (avec une fréquence déterminée), ou alors le capteur peut adresser un message au serveur lorsque la température varie par rapport à une température de consigne fixée par un utilisateur (selon une condition).

En fonction des situations, par exemple en fonction du moment de la journée ou en fonction de l'occupation ou non de l'habitation, l'envoi d'informations relatives à la température peut s'avérer utile ou inutile. Par exemple, une fluctuation de température par rapport à une température de consigne utilisée pour la régulation de la température d'une pièce, peut impacter plus ou moins les occupants de l'habitation selon que la variation de température se produise pendant la journée ou pendant la nuit.

Ainsi, grâce à l'invention, en fonction d'une information relative à l'environnement du capteur, par exemple qu'il fasse jour ou nuit, que la pièce soit occupée ou vide etc., le capteur peut être configuré pour émettre des messages plus ou moins souvent. Par exemple, un capteur peut être configuré pour émettre un message lorsque la température de la pièce par rapport à une température de consigne varie de 1°C pendant la journée, et dès que la nuit arrive (ou à partir d'une heure prédéfinie), le capteur est reconfiguré pour émettre un message lorsque l'écart de température est de 3°C.

Selon un autre exemple, un capteur de niveau de luminosité peut configurer ses paramètres d'émission de façon à émettre des messages concernant la luminosité que dans des tranches horaires pendant lesquelles les changements de luminosité se produisent, au lieu d'émettre des messages concernant la luminosité pendant toute la journée. Les messages concernant la luminosité sont par exemple utilisés par un autre objet connecté commandant la position d'un volet ou d'un parasol. Dans cet exemple, l'information contextuelle obtenue par le capteur est l'heure, les paramètres de configuration du dispositif sont configurés pour envoyer ou ne pas envoyer de messages en fonction de l'heure. L'émission de messages par le capteur étant adaptée au contexte dans lequel le capteur se trouve, la consommation d'énergie du capteur est optimisée.

Bien entendu, l'invention s'applique à tout autre type de capteur ou autre type d'objet connecté. L'homme du métier sait appliquer les procédés et dispositifs proposé à tout autre type d'objet connecté.

La **figure 4a** illustre schématiquement une architecture matérielle d'un dispositif électronique pouvant mettre en œuvre le procédé de /ou le procédé d'émission proposés.

Le dispositif électronique 2 comprend un bus de communication 200 auquel sont reliées :
- une unité de traitement 201, nommée sur la figure CPU (pour « Central Processing Unit ») et pouvant comporter un ou plusieurs processeurs ;
- une mémoire non volatile 202, par exemple ROM (pour « Read Only Memory »), EEPROM (pour « Electrically Erasable Read Only Memory ») ou une mémoire Flash;
- une mémoire vive 203 ou RAM (pour « Random Access Memory ») ;
- une interface 204 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec l'équipement 2 via une interface graphique ou interface homme-machine ; et
- une interface de communication 205, nommée COM sur la figure, adaptée à échanger de données par exemple avec d'autres dispositifs électroniques 2, 3, ou avec un serveur 30 via un réseau de communications 10, 20.

La mémoire vive 203 comprend des registres adaptés à l'enregistrement des variables et paramètres créés et modifiés au cours de l'exécution d'un programme informatique comprenant des instructions pour la mise en œuvre du procédé de configuration et/ou du procédé d'émission proposés. Les codes d'instructions du programme stocké en mémoire non-volatile 202 sont chargés en mémoire RAM 203 en vue d'être exécutés par l'unité de traitement CPU 201.

La mémoire non-volatile 202 est par exemple une mémoire réinscriptible de type EEPROM ou mémoire Flash pouvant constituer un support au sens de l'invention, c'est-à-dire pouvant comprendre un programme informatique PG comprenant des instructions pour la mise en œuvre du procédé de configuration et/ou du procédé d'émission proposés. La mémoire réinscriptible peut comprendre par exemple une table répertoriant des informations contextuelles avec des paramètres de configuration associés.

Ce programme PG définit, par le biais de ses instructions, des modules fonctionnels du dispositif électronique 2 qui sont mise en œuvre et/ou commandent les éléments matériels décrits précédemment. La **figure 4b** est une représentation fonctionnelle d'un équipement conforme à un mode de réalisation.

Ces modules peuvent comprendre notamment :
- un module d'obtention 21 d'une information contextuelle relative à l'environnement du dispositif électronique,
- Un module d'établissement 22 d'au moins un paramètre de configuration du dispositif électronique à une valeur qui est fonction de ladite information contextuelle obtenue,
- un module l'émission 23 d'un message.

Selon des modes de réalisation, le dispositif électronique peut comporter :
- - un module de sélection 24 configuré pour sélectionner au moins un paramètre en fonction de l'information contextuelle obtenue ;
- - un module de détermination 25 configuré pour déterminer une valeur d'un paramètre en fonction de l'information contextuelle obtenue ; et/ou

- un module d'émission 26 configuré pour émettre des messages.

Les modules et moyens précités sont pilotés par le processeur de l'unité de traitement 201. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gate Array »).

Ainsi, grâce à l'invention, un dispositif électronique peut être configuré en prenant en compte l'environnement où il est installé, cette configuration tenant compte en temps réel des conditions entourant l'objet. Le fonctionnement du dispositif électronique est par conséquent, adapté à son environnement, consommant de l'énergie lorsqu'il est nécessaire et économisant de l'énergie lorsqu'il est possible. La consommation d'énergie du dispositif électronique est ainsi optimisée.

## Revendications

1. Procédé de configuration d'un dispositif électronique (2) relié à un réseau de communications, mis en œuvre dans ledit dispositif électronique ledit procédé comportant:
- une obtention (E1) d'au moins une information contextuelle (I) relative à l'environnement du dispositif électronique (2),
- un établissement (E4) d'au moins un paramètre de configuration (P) du dispositif électronique (2) à une valeur qui est fonction de ladite au moins une information contextuelle obtenue,
et ledit procédé étant **caractérisé en ce que**, lorsque au moins une dite information contextuelle est relative à une présence ou absence d'une personne à proximité dudit dispositif et/ou à une donnée de géolocalisation d'un utilisateur, au moins un dit paramètre de configuration est une fréquence d'émission de messages et le procédé comprend un envoi de messages à ladite fréquence d'émission.

2. Procédé de configuration conforme à la revendications 1 où, en outre, lorsque au moins une dite information contextuelle est relative à une heure donnée, au moins un dudit au moins un paramètre est un paramètre de configuration définissant l'instant d'émission de messages.

3. Procédé de configuration conforme à l'une des revendications 1 ou 2, où, en outre, lorsque au moins une dite information contextuelle est relative à un niveau de réception de signal, au moins un dudit au moins un paramètre est un paramètre de configuration définissant la puissance d'émission de messages.

4. Procédé de configuration conforme à l'une des revendications 1 à 3, dans lequel ladite obtention (E1) d'au moins une information contextuelle comporte la réception (E10) d'un message (M) comportant ladite au moins une information contextuelle.

5. Procédé de configuration conforme à la revendication 4, dans lequel ledit message comportant ladite au moins une information contextuelle est reçue (E10) en provenance d'une passerelle (3), ladite passerelle permettant l'accès audit réseau de communication et à un deuxième réseau de communication (20).

6. Procédé de configuration conforme à la revendication 5, dans lequel ledit message (M) comportant ladite au moins une information contextuelle est reçue (E10) en provenance d'un deuxième dispositif électronique relié audit réseau de communications (10).

7. Procédé de configuration conforme à l'une des revendications 1 à 6, dans lequel ladite au moins une information contextuelle a été préalablement signée par un tiers de confiance.

8. Dispositif électronique relié à un réseau de communications, ledit dispositif électronique comportant :
- un module d'obtention (21) configuré pour obtenir au moins une information contextuelle (I) relative à l'environnement du dispositif électronique, et
- un module d'établissement (22) configuré pour établir au moins un paramètre de configuration du dispositif électronique à une valeur qui est fonction de ladite au moins une information contextuelle obtenue,
et ledit dispositif est **caractérisé en ce que** :
- lorsque au moins une dite information contextuelle est relative à une présence ou absence d'une personne à proximité dudit dispositif et/ou à une donnée de géolocalisation d'un utilisateur, au moins un dit paramètre de configuration est une fréquence d'émission de messages et le dispositif comprend un module d'envoi configuré pour envoyer des messages à ladite fréquence d'émission.

9. Dispositif électronique conforme à la revendications 8 où, en outre, lorsque au moins une dite information contextuelle est relative à une heure donnée, au moins un dudit au moins un paramètre est un paramètre de configuration définissant l'instant d'émission de messages.

10. Dispositif électronique conforme à l'une quelconque des revendications 8 à 9, où, en outre, lorsque au moins une dite information contextuelle est relative à un niveau de réception de signal, au moins un dudit au moins un paramètre est un paramètre de configuration définissant la puissance d'émission de messages.

11. Dispositif électronique conforme à l'une quelconque des revendications 8 à 10, dans lequel le module d'obtention configuré en outre pour réceptionner un message (M) comportant ladite au moins une information contextuelle.

12. Dispositif électronique conforme à la revendication 11, dans lequel ledit message comportant ladite au moins une information contextuelle est reçue (E10) en provenance d'une passerelle (3), ladite passerelle permettant l'accès audit réseau de communication et à un deuxième réseau de communication (20).

13. Système comportant un ensemble de dispositifs électroniques reliés à un réseau de communications, dans lequel au moins un dispositif électronique de l'ensemble est conforme à la revendication 8.

14. Programme d'ordinateur pour un dispositif électronique, comprenant des instructions de code de programme destinées à commander l'exécution des étapes du procédé de configuration selon l'une des revendications 1 à 7.

15. Support d'informations lisible par un processeur dans un dispositif électronique (2), sur lequel est enregistré le programme d'ordinateur selon la revendication 14.

## Patentansprüche

1. Verfahren zur Konfiguration einer mit einem Kommunikationsnetz verbundenen elektronischen Vorrichtung (2), das in der elektronischen Vorrichtung ausgeführt wird, wobei das Verfahren Folgendes aufweist:
- Erhalten (E1) mindestens einer Kontextinformation (I) bezüglich der Umgebung der elektronischen Vorrichtung (2),
- Einstellen (E4) mindestens eines Konfigurationsparameters (P) der elektronischen Vorrichtung (2) auf einen Wert, der von der mindestens einen erhaltenen Kontextinformation abhängt,
wobei das Verfahren **dadurch gekennzeichnet ist, dass** wenn sich mindestens eine Kontextinformation auf die An- oder Abwesenheit einer Person in der Nähe der genannten Vorrichtung und/oder auf Geolokalisierungsdaten eines Nutzers bezieht, mindestens ein Konfigurationsparameter eine Sendefrequenz für Nachrichten ist und das Verfahren das Senden von Nachrichten mit dieser Sendefrequenz aufweist.

2. Verfahren zur Konfiguration nach Anspruch 1, wobei ferner, wenn sich mindestens eine Kontextinformation auf einen bestimmten Zeitpunkt bezieht, mindestens einer des mindestens einen Parameters ein Konfigurationsparameter ist, der den Übertragungszeitpunkt von Nachrichten definiert.

3. Verfahren zur Konfiguration nach einem der Ansprüche 1 oder 2, wobei ferner, wenn sich mindestens eine Kontextinformation auf einen Signalempfangspegel bezieht, mindestens einer des mindestens einen Parameters ein Konfigurationsparameter ist, der die Sendeleistung von Nachrichten definiert.

4. Verfahren zur Konfiguration nach einem der Ansprüche 1 bis 3, wobei das Erhalten (E1) mindestens einer Kontextinformation das Empfangen (E10) einer Nachricht (M) aufweist, die die mindestens eine Kontextinformation enthält.

5. Verfahren zur Konfiguration nach Anspruch 4, wobei die Nachricht, die die mindestens eine Kontextinformation enthält, von einem Gateway (3) empfangen wird (E10), wobei das Gateway den Zugriff auf das Kommunikationsnetz und auf ein zweites Kommunikationsnetz (20) ermöglicht.

6. Verfahren zur Konfiguration nach Anspruch 5, wobei die Nachricht (M), die die mindestens eine Kontextinformation enthält, von einer zweiten elektronischen Vorrichtung empfangen wird (E10), die mit dem Kommunikationsnetz (10) verbunden ist.

7. Verfahren zur Konfiguration nach einem der Ansprüche 1 bis 6, wobei die mindestens eine Kontextinformation zuvor von einem vertrauenswürdigen Dritten signiert wurde.

8. Mit einem Kommunikationsnetzwerk verbundene elektronische Vorrichtung, wobei die elektronische Vorrichtung Folgendes aufweist:
- ein Erhaltungsmodul (21), das so konfiguriert ist, dass es mindestens eine Kontextinformation (I) bezüglich der Umgebung der elektronischen Vorrichtung erhält, und
- ein Einrichtungsmodul (22), das so konfiguriert ist, dass es mindestens einen Konfigurationsparameter der elektronischen Vorrichtung auf einen Wert setzt, der eine Funktion der mindestens einen erhaltenen Kontextinformation ist,
wobei die Vorrichtung **dadurch gekennzeichnet ist, dass**:
- wenn sich mindestens eine Kontextinformation auf die An- oder Abwesenheit einer Person in der Nähe der genannten Vorrichtung und/oder auf Geolokalisierungsdaten eines Nutzers bezieht, mindestens ein Konfigurationsparameter eine Sendefrequenz für Nachrichten ist und die Vorrichtung ein Modul enthält, das so konfiguriert ist, dass es Nachrichten mit dieser Sendefrequenz sendet.

9. Elektronische Vorrichtung nach Anspruch 8, wobei ferner, wenn sich mindestens eine Kontextinformation auf einen bestimmten Zeitpunkt bezieht, mindestens einer des mindestens einen Parameters ein Konfigurationsparameter ist, der den Übertragungszeitpunkt von Nachrichten definiert.

10. Elektronische Vorrichtung nach einem der Ansprüche 8 bis 9, wobei ferner, wenn sich mindestens eine Kontextinformation auf einen Signalempfangspegel bezieht, mindestens einer des mindestens einen Parameters ein Konfigurationsparameter ist, der die Sendeleistung von Nachrichten definiert.

11. Elektronische Vorrichtung nach einem der Ansprüche 8 bis 10, wobei das Erhaltungsmodul ferner so konfiguriert ist, dass es eine Nachricht (M) empfängt, die die mindestens eine Kontextinformation enthält.

12. Elektronische Vorrichtung nach Anspruch 11, wobei die Nachricht, die die mindestens eine Kontextinformation enthält, von einem Gateway (3) empfangen wird (E10), wobei das Gateway den Zugriff auf das Kommunikationsnetz und auf ein zweites Kommunikationsnetz (20) ermöglicht.

13. System, das eine Gruppe elektronischer Vorrichtungen enthält, die mit einem Kommunikationsnetz verbunden sind, wobei mindestens eine elektronische Vorrichtungen der Gruppe den Anforderungen nach Anspruch 8 entspricht.

14. Computerprogramm für eine elektronische Vorrichtung, das Programmcodeanweisungen zum Steuern der Ausführung der Schritte des Verfahrens zur Konfiguration nach einem der Ansprüche 1 bis 7 aufweist.

15. Von einem Prozessor in einer elektronischen Vorrichtung (2) lesbarer Informationsträger, auf dem das Programm nach Anspruch 14 gespeichert ist.

## Claims

1. Method for configuring an electronic device (2) connected to a communications network, implemented in said electronic device, said method comprising:
- obtaining (E1) at least one item of contextual information (I) relating to the environment of the electronic device (2),
- setting (E4) at least one configuration parameter (P) of the electronic device (2) to a value that depends on said at least one obtained item of contextual information,
and said method being **characterized in that**, when at least one said item of contextual information relates to presence or absence of a person close to said device and/or to a geolocation datum concerning a user, at least one said configuration parameter is a message transmission frequency and the method comprises sending messages at said transmission frequency.

2. Configuration method according to Claim 1, wherein, furthermore, when at least one said item of contextual information relates to a given time, at least one of said at least one parameter is a configuration parameter defining the message transmission time.

3. Configuration method according to either of Claims 1 and 2, wherein, furthermore, when at least one said item of contextual information relates to a signal reception level, at least one of said at least one parameter is a configuration parameter defining the message transmission power.

4. Configuration method according to one of Claims 1 to 3, wherein said obtaining (E1) at least one item of contextual information comprises receiving (E10) a message (M) containing said at least one item of contextual information.

5. Configuration method according to Claim 4, wherein said message containing said at least one item of contextual information is received (E10) from a gateway (3), said gateway allowing access to said communications network and to a second communications network (20).

6. Configuration method according to Claim 5, wherein said message (M) containing said at least one item of contextual information is received (E10) from a second electronic device connected to said communications network (10).

7. Configuration method according to one of Claims 1 to 6, wherein said at least one item of contextual information has been signed beforehand by a trusted third party.

8. Electronic device connected to a communications network, said electronic device comprising:
- an obtainment module (21) configured to obtain at least one item of contextual information (I) relating to the environment of the electronic device, and
- a setting module (22) configured to set at least one configuration parameter of the electronic device to a value that depends on said at least one obtained item of contextual information,
and said device is **characterized in that**:
- when at least one said item of contextual information relates to presence or absence of a person close to said device and/or to a geolocation datum concerning a user, at least one said configuration parameter is a message transmission frequency and the device comprises a sending module configured to send messages at said transmission frequency.

9. Electronic device according to Claim 8, wherein, furthermore, when at least one said item of contextual information relates to a given time, at least one of said at least one parameter is a configuration parameter defining the message transmission time.

10. Electronic device according to either one of Claims 8 and 9, wherein, furthermore, when at least one said item of contextual information relates to a signal reception level, at least one of said at least one parameter is a configuration parameter defining the message transmission power.

11. Electronic device according to any one of Claims 8 to 10, wherein the obtainment module is furthermore configured to receive a message (M) containing said at least one item of contextual information.

12. Electronic device according to Claim 11, wherein said message containing said at least one item of contextual information is received (E10) from a gateway (3), said gateway allowing access to said communications network and to a second communications network (20).

13. System comprising a set of electronic devices connected to a communications network, wherein at least one electronic device of the set is in accordance with Claim 8.

14. Computer program for an electronic device, comprising program code instructions intended to command the execution of the steps of the configuration method according to one of Claims 1 to 7.

15. Information medium able to be read by a processor in an electronic device (2), on which the computer program according to Claim 14 is recorded.
